# EUROPÄISCHE PATENTSCHRIFT

(11) **EP 2 371 069 B1**
(45) Veröffentlichungstag und Bekanntmachung des Hinweises auf die Patenterteilung: **02.08.2017**
(21) Anmeldenummer: 09775099.6
(22) Anmeldetag: 24.11.2009
(51) Int. Cl.: H04B 5/00, H04B 5/02

(54) **ANORDNUNG ZUR BERÜHRUNGSLOSEN ENERGIEÜBERTRAGUNG**
ARRANGEMENT FOR NONCONTACT ENERGY TRANSFER
AGENCEMENT POUR LE TRANSFERT D'ÉNERGIE SANS CONTACT

(30) Priorität: 26.11.2008 DE 102008059091
(43) Veröffentlichungstag der Anmeldung: 05.10.2011
(73) Patentinhaber: SEW-EURODRIVE GmbH & Co. KG, 76646 Bruchsal (DE)
(72) Erfinder: HUA, Zhidong, 76131 Karlsruhe (DE); SIMON, Olaf, 76646 Bruchsal (DE); SCHÄFER, Thomas, 76689 Neuthard (DE); SCHMIDT, Josef, 76676 Graben-Neudorf (DE)
(86) Internationale Anmeldenummer: PCT/EP2009/008352
(87) Internationale Veröffentlichungsnummer: WO 2010/060593

(56) Entgegenhaltungen:
- WO-A1-99/50806
- WO-A1-2004/090918
- WO-A2-2008/058627
- DE-A1-102004 031 580
- DE-A1-102005 008 555
- US-A- 5 293 308

## Beschreibung

Die Erfindung betrifft eine Anordnung zur berührungslosen Energieübertragung.

Aus der DE 10 2004 031 580 A1 ist eine Anordnung zur berührungslosen Energieübertragung bekannt.

Aus der WO 99/50806 A1 ist eine Anordnung zur berührungslosen induktiven Leistungsübertragung und Datenübertragung bekannt.

Aus der WO 2004/090918 A1 ist eine Anordnung zur berührungslosen induktiven Leistungsübertragung bekannt, wobei zwischen Stromquelle und Primärleiterstrecke ein Pi Netzwerk angeordnet ist.

Aus der US 5 293 308 A ist eine Verteileranordnung zur berührungslosen induktiven Leistungsübertragung bekannt. Aus der WO 2008/058627 A2 und der DE 10 2005 008 555 A1 ist eine kapazitive Datenkopplung an einen Primärleiter bekannt.

Der Erfindung liegt die Aufgabe zugrunde, eine Anordnung zur berührungslosen Energieübertragung weiterzubilden mit möglichst einfacher und kostengünstiger berührungsloser Datenübertragung.

Erfindungsgemäß wird die Aufgabe bei der Anordnung zur berührungslosen Energieübertragung nach den in Anspruch 1 angegebenen Merkmalen gelöst.

Wichtige Merkmale der Erfindung bei der Anordnung sind, dass die Anordnung zur berührungslosen Energieübertragung vorgesehen ist,
wobei ein langgestreckt verlegter Primärleiter vorgesehen ist,
wobei zumindest ein entlang dem Primärleiter verfahrbarer Wagen vorgesehen ist,
wobei am Wagen ein Mittel zur Datenübertragung vorgesehen ist,
wobei der Primärleiter aus gegeneinander elektrisch isoliert vorgesehenen Einzel-Litzendrähten zusammengesetzt ist,
wobei das Mittel zur Datenübertragung zumindest ein Koppelelement umfasst, welches kapazitiv an die Litzendrähte derart gekoppelt vorgesehen ist, dass Signalspannungen ein- und/oder auskoppelbar sind in die Litzendrähte,
wobei das Koppelelement zumindest zwei Koppelflächen umfasst, an die eine Spannung zum Senden von Daten anlegbar ist,
wobei die Normalenrichtungen der Koppelflächen senkrecht zueinander orientiert sind.

Von Vorteil ist dabei, dass zur Datenübertragung zwar separate Koppelmittel verwendet werden, die aber sehr kostengünstig und einfach herstellbar sind. Insbesondere ist zur Datenübertragung der für die Energieübertragung sowieso vorhandene, mit Wechselstrom von mindestens 10 kHz beaufschlagte Primärleiter verwendet. Somit ist für die Datenübertragung keine zusätzliche Leitung notwendig sondern es ist ermöglicht Signale in den Primärleiter kostengünstig und einfach einzukoppeln und weiterzutragen. Wesentliche Eigenschaft des Primärleiters ist dessen Ausführung aus Hochfrequenzlitze. Erfindungsgemäß wurde erkannt, dass ein kapazitives Einkoppeln von Signalspannungen an ein Geflecht aus Hoch einzeln gegeneinander isoliert ausgeführten Litzendrähten ausführbar ist. Bei gegeneinander nicht elektrisch isolierten Litzendrähten funktioniert diese Datenübertragung gar nicht oder zumindest stark eingeschränkt und nur bei sehr hohen Frequenzen. Unter elektrischer Isolierung wird hier eine Isolierung verstanden, die für Gleichspannungen sehr gut wirksam ist. Es ist allseits bekannt, dass bei sehr hohen Frequenzen die Isolierfähigkeit abnimmt.

Bei einer vorteilhaften Ausgestaltung sind die Litzendrähte jeweils an ihrem äußeren Umfang mit einer elektrischen Isolierschicht versehen. Von Vorteil ist dabei, dass mittels der kapazitiven Einkoppelung ein lokal zwischen verschiedenen Litzendrähten unterschiedliches Potential erzeugbar ist. Wenn die Litzendrähte in elektrisch leitendem Kontakt stehen würden, wären sie im Wesentlichen stets auf dem gleichen Potential. Mittels der elektrischen Isolierung ist es aber erreichbar, dass verschiedene Potentiale erreicht werden und somit Signalspannungen einkoppelbar sind, die zwischen den Litzendrähten bestehen. Sodann breiten sich die Signalspannungen in Richtung des Primärleiters aus und sind in entsprechender Weise detektierbar mittels entsprechender Koppelflächen. Da erfindungsgemäß mit Wechselspannungen und Wechselströmen, vorzugsweise über 10 kHz, gearbeitet wird, entsprechen den lokal wechselnden Potentialen der Litzendrähte gemäß Maxwellscher Gleichungen Wechselströme, weshalb bei der vorliegenden Beschreibung im Wesentlichen nicht fein unterschieden wird zwischen induzierten Strömen und diesen zugehörigen elektrischen Feldern.

Es wird noch angemerkt, dass die erwähnten Ströme oder Spannungen zur Signalübertragung nur zusätzliche Anteile darstellen zu den Anteilen, welche zur Leistungsübertragung notwendig sind. Insbesondere ist hierbei die Durchschlagfestigkeit der verwendeten Isolierungen im Vergleich zur auftretenden Gesamtspannung zu berücksichtigen. Erfindungsgemäß umfasst das Koppelelement zumindest zwei Koppelflächen, an die eine Spannung anlegbar ist, insbesondere zum Senden von Daten. Von Vorteil ist dabei, dass ein elektrisches Feld ausbildbar ist, das die genannten Signalströme induziert.

Bei einer vorteilhaften Ausgestaltung umfasst das Koppelelement zumindest zwei Koppelflächen, wobei die zwischen den Koppelflächen anliegende Spannung erfassbar ist, insbesondere zum Empfangen von Daten. Von Vorteil ist dabei, dass ein Detektieren der Signalströme beziehungsweise Signalspannungen in einfacher Weise ermöglicht ist.

Bei einer vorteilhaften Ausgestaltung sind die Koppelflächen metallisch und/oder im Wesentlichen eben ausgeführt. Von Vorteil ist dabei, dass eine einfache kostengünstige Ausführung ausreichend ist. Erfindungsgemäß sind die Normalenrichtungen der Koppelflächen senkrecht zueinander orientiert. Bei einer vorteilhaften Ausführung stehen die Normalenrichtungen auch senkrecht zur Richtung des Primärleiters. Von Vorteil ist dabei, dass ein inhomogenes Feld im Bereich des Primärleiters entsteht und somit ein besonders gutes Signal-Rausch-Verhältnis erreichbar ist.

Bei einem weiteren Bespiel sind die Normalenrichtungen der Koppelflächen parallel oder mit einem Winkel von bis zu 40° zueinander orientiert, insbesondere wobei die Normalenrichtungen auch senkrecht stehen zur Richtung des Primärleiters. Von Vorteil ist dabei, dass die Fertigung der Anordnung in einfacher Weise ausführbar ist und die zu fertigenden Winkel unkritische Wertbereiche aufweisen.

Bei einem weiteren Beispiel umfasst das Koppelement eine Wicklung, wobei das zugehörige magnetische Feld im Bereich des Primärleiters inhomogen ist. Von Vorteil ist dabei, dass ein besonders gutes Signal-Rausch-Verhältnis erreichbar ist, da der Unterschied der Werte der eingekoppelten Stromanteile und/oder Spannungsanteile in den verschiedenen Litzendrähten sehr hoch ist.

Bei einem weiteren Beispiel umfasst das Koppelement eine Wicklung, wobei ein wesentlicher Teil des von der Wicklung erzeugten Magnetfeldes aus dem Koppelement zum Primärleiter hin austritt, insbesondere in zu einer Richtung des Primärleiters senkrechten Richtung. Von Vorteil ist dabei, dass eine induktive Einkoppelung in einfacher Weise ausführbar ist.

Bei einem weiteren Beispiel ist die Wicklung um einen Schenkel eines Ferritkerns herum vorgesehen. Insbesondere um einen Mittelschenkel eines E-förmigen Ferritkerns, insbesondere wobei die Schenkel in einer Ebene liegen, deren Normalenrichtung senkrecht zur Richtung des Primärleiters vorgesehen ist. Von Vorteil ist dabei, dass eine symmetrische Anordnung ausführbar ist und somit ein hoher Wirkungsgrad erreichbar ist, insbesondere eine zu einer die Mitte des Primärleiters enthaltenden Symmetrieebene symmetrische Anordnung, wobei eine gerade Verlegung des Primärleiters vorausgesetzt ist. Bei nicht gerader Verlegung des Primärleiters gilt der geschilderte Sachverhalt zumindest im durch die Koppelelemente überdeckten Streckenbereich des Primärleiters.

Bei einer vorteilhaften Ausgestaltung umfasst ein stationär angeordnetes Mittel zur Datenübertragung ebenfalls ein entsprechendes Koppelelement, insbesondere wobei Datenübertragung zwischen einem oder mehreren Wagen sowie dem stationär angeordneten Mittel vorgesehen ist. Von Vorteil ist dabei, dass zwischen zwei zum Primärleiter beweglichen Fahrzeugen und/oder zwischen einem zum Primärleiter beweglichen Fahrzeug und einer stationär zum Primärleiter angeordneten Vorrichtung die erfindungsgemäße berührungslose Datenübertragung ermöglicht ist.

Bei einer vorteilhaften Ausgestaltung ist an dem Wagen eine mit dem Primärleiter induktiv gekoppelte Sekundärwicklung zur Versorgung eines am Wagen vorgesehenen oder mit dem Wagen verbundenen oder elektrisch oder magnetisch gekoppelten Verbrauchers vorgesehen. Von Vorteil ist dabei, dass der Wagen beispielsweise einen elektrischen Antrieb aufweisen darf, mit welchem dieser Wagen, also ein Fahrzeug, und/oder eine auf dem Wagen vorgesehene Last bewegbar ist. Darüber hinaus ist auch eine stationär angeordnete Einheit aus dem Wagen beispielsweise induktiv versorgbar, wobei somit der Wagen bei Erreichen der geeigneten Position diese weitere berührungslose Energieübertragung ermöglicht.

Bei einer vorteilhaften Ausgestaltung wird in den Primärleiter ein Wechselstrom eingeprägt, insbesondere mit einer Frequenz zwischen 10 und 500 kHz, insbesondere mit über 1 oder sogar 10 Ampere. Von Vorteil ist dabei, dass
Hohe Leistungen im Bereich von Kilowatt übertragbar sind, wobei nur geringe Verluste auftreten.

Bei einer vorteilhaften Ausgestaltung ist der Sekundärwicklung eine Kapazität derart in Reihe oder parallel zugeschaltet, dass die zugehörige Resonanzfrequenz im Wesentlichen der Frequenz des in den Primärleiter eingeprägten Wechselstromes entspricht. Von Vorteil ist dabei, dass ein besonders hoher Wirkungsgrad erreichbar ist auch bei schwankendem und/oder schlechtem Kopplungsgrad.

Weitere Vorteile ergeben sich aus den Unteransprüchen.

### Bezugszeichenliste

- 1: Primärleiter
- 2: Koppelfläche
- 3: Koppelfläche
- 50: Ferritkern
- 51: Ferritkern

Die Erfindung wird nun anhand von Abbildungen näher erläutert:
In der Figur 1 ist eine erfindungsgemäße Vorrichtung mit kapazitiver Kopplung in Schnittansicht und in Figur 2 in zugehöriger Seitenansicht gezeigt.

In der Figur 3 ist eine andere Vorrichtung mit kapazitiver Kopplung in Schnittansicht und in Figur 4 in zugehöriger Seitenansicht gezeigt.

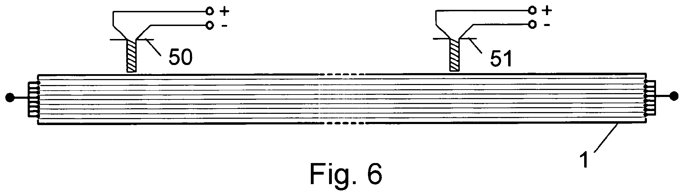

In Figur 5 ist eine Vorrichtung mit induktiver Kopplung in Schnittansicht und in Figur 6 in zugehöriger Seitenansicht gezeigt.

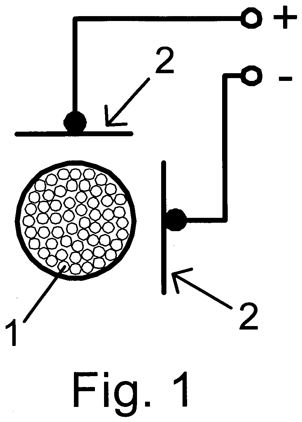

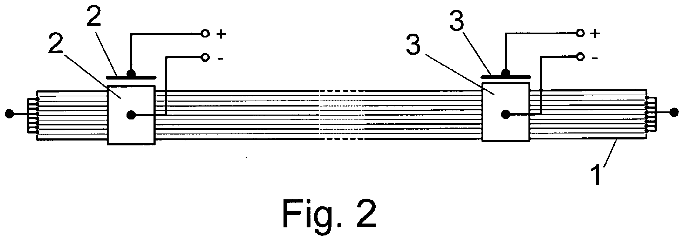

In Figur 1 und 2 ist der Primärleiter 1 gezeigt, der langgestreckt ausgeführt ist und in welchen ein Wechselstrom eingeprägt ist, vorzugsweise mit einer Frequenz zwischen 10 und 500 kHz.

Entlang diesem in einer Anlage verlegten Primärleiter 1 ist ein Wagen bewegbar angeordnet, der eine an den Primärleiter 1 induktiv gekoppelte Sekundärspule umfasst, der eine Kapazität parallel oder in Reihe derart zugeschaltet ist, dass die zugehörige Resonanzfrequenz im Wesentlichen der Frequenz des in den Primärleiter eingeprägten Wechselstromes entspricht. Die Stärke des Wechselstromes kann hierbei 1 oder sogar 10 Ampere dauerhaft übersteigen.

An diesem entlang des Primärleiters 1 verfahrbaren Wagen sind des Weiteren Mittel zur Datenübertragung vorgesehen. Diese umfassen zumindest die in den Figuren 1 und 2 gezeigten Koppelflächen 2. Diese sind als rechteckförmige Metallplatten ausgeführt, deren Normalenrichtung senkrecht aufeinander und senkrecht zur Primärleiterrichtung orientiert sind.

Anstatt rechteckförmiger Metallplatten sind auch quadratische oder abgerundete Metallplatten verwendbar.

An die beiden Metallplatten wird jeweils ein Potential einer hochfrequenten Wechselspannungsquelle angelegt und somit eine Polarisierung im Bereich des Primärleiters 1 bewirkt, der als Hochfrequenz-Litze ausgeführt ist. Dabei besteht also der Primärleiter aus einer Anzahl von Litzendrähten, die jeweils elektrisch zueinander isoliert ausgeführt sind.

In Figur 2 sind weitere analog ausgeführte Koppelflächen 3 gezeigt, die mit einem Spannungserfassungsmittel verbunden sind, wodurch also die zwischen den Metallplatten anliegende Spannung erfasst wird. Die Koppelflächen 3 sind entweder an einem weiteren verfahrbaren Wagen oder stationär angeordnet.

In der geschilderten Weise ist also eine Datenübertragung zwischen dem mit den Koppelflächen 2 verbundenen System und dem mit den Koppelflächen 3 verbundenen System ermöglicht.

Ebenso ist zusätzlich an den Koppelflächen 2 ein Spannungserfassungsmittel und an den Koppelflächen 3 eine hochfrequente Wechselspannungsquelle verbindbar, um dann auf diese Weise eine bidirektionale Datenübertragung zu ermöglichen.

Für die Datenübertragung sind verschiedene Frequenzbänder nutzbar, vorzugsweise oberhalb 10 MHz bis zu 10 GHz.

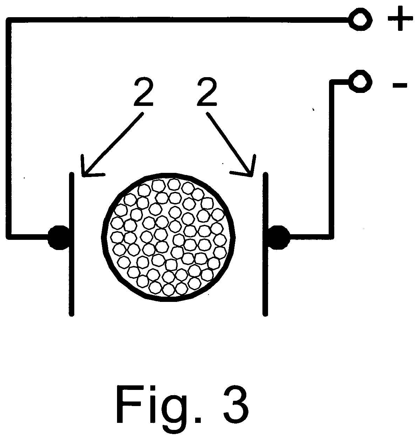

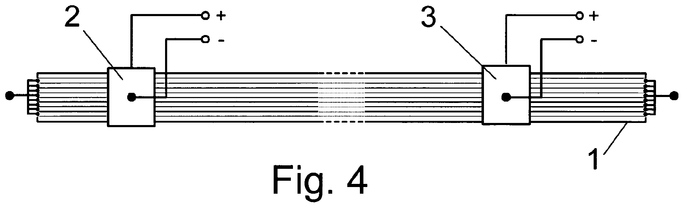

In den Figuren 3 und 4 ist eine zu den Figuren 1 und 2 analog ausgeführte Anordnung gezeigt, wobei allerdings die Normalenrichtungen der ebenen Metallplatten 2 parallel zueinander orientiert sind.

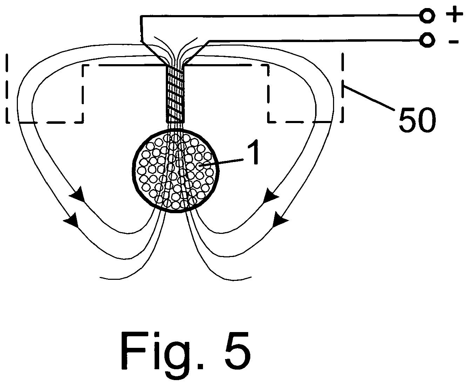

In der Figur 5 ist eine induktive Einkoppelung der Daten anstatt der in den Figuren 1 und 3 gezeigten kapazitiven Einkoppelung gezeigt.

Hierzu wird ein E-förmiger Ferritkern 50 verwendet, dessen Mittelschenkel des E viel schmaler ausgeführt ist als die beiden äußeren Schenkel des E.

Um den Mittelschenkel herum ist eine einkoppelnde Wicklung vorgesehen, wobei die aus dem Ferritkern 50 austretenden Magnetfeldlinien im Wesentlichen auf die Mitte des Primärleiters hin gerichtet austreten. Insbesondere ist der Mittelschenkel senkrecht zur Richtung des Primärleiters 50 orientiert.

Die durch den Primärleiter verlaufenden Wechsel-Magnetfeldlinien induzieren elektrische Felder, so dass wiederum eine entsprechende Polarisierung erzeugbar ist. Wichtig ist dabei auch, dass im Bereich des Primärleiters ein sehr inhomogenes Magnetfeld vorgesehen ist, also die Magnetfeldstärke in zumindest einer Richtung stark abfällt.

An der um den Mittelschenkel herum vorgesehenen Wicklung sind vorzugsweise anstatt der gemäß Figuren 1 bis 4 vorgesehenen Spannungsquelle und Spannungserfassungsmittel eine Stromquelle und Stromerfassungsmittel vorgesehen.

Ansonsten ist auch bei einer Anordnung nach Figur 4 wiederum eine bidirektionale Datenübertragung zwischen zwei verfahrbaren Wagen oder einem Wagen und einer stationären Einheit ausführbar. Dabei ist der zweite Ferritkern mit Bezugszeichen 51 bezeichnet.

Die geometrische Ausdehnung des E ist dabei abhängig vom Durchmesser des Primärleiters 1 und dem Abstand des Endbereiches des Mittelschenkel des E vom Primärleiter 1.

Bei weiteren Beispielen ist statt eines E auch eine entsprechende andere Geometrie wählbar. Wesentlich hierbei ist, dass das oben beschriebene inhomogene Feld innerhalb des Querschnitts des Primärleiters erzeugbar ist.

Bei weiteren Beispielen sind auch statt nur zweier Koppelflächen weitere Koppelflächen beziehungsweise statt eines Ferritkerns weitere am gleichen Wagen, also Fahrzeug, vorsehbar.

Zur Datenübertragung sind auch verschiedene Frequenzbänder zusammen nutzbar, indem zwei oder mehrere verschieden frequente Signalverläufe überlagert werden. Auf Empfängerseite sind dann entsprechende Filter vorzusehen.

Das in dieser Schrift verwendete Wort senkrecht ist nicht als exakter Winkel von 90° zu verstehen sondern es sind auch Winkel zwischen 50° und 130° zu verstehen, also geringfügige Abweichungen von der mathematisch exakten senkrechten Richtung. Ebenso sind die Koppelflächen (2,3) vom Primärleiter aus gesehen zwar im Wesentlichen eben gestaltet, aber die ebene Ausführung erlaubt auch kleine wellenförmige Abweichungen von der idealen Ebene, wobei die zugehörige Amplitude auch bis 20% vom Abstand der Koppelfläche zur Oberfläche des Primärleiters betragen darf.

## Patentansprüche

1. Anordnung zur berührungslosen Energieübertragung,
wobei ein langgestreckt verlegter Primärleiter vorgesehen ist,
wobei zumindest ein entlang dem Primärleiter verfahrbarer Wagen vorgesehen ist,
wobei am Wagen ein Mittel zur Datenübertragung vorgesehen ist, wobei
der Primärleiter aus gegeneinander elektrisch isoliert vorgesehenen Einzel-Litzendrähten zusammengesetzt ist,
**dadurch gekennzeichnet, dass**
das Mittel zur Datenübertragung zumindest ein Koppelelement umfasst, welches kapazitiv an die Litzendrähte derart gekoppelt vorgesehen ist, dass Signalspannungen ein- und/oder auskoppelbar sind in die Litzendrähte,wobei das Koppelelement zumindest zwei Koppelflächen umfasst,
an die eine Spannung zum Senden von Daten anlegbar ist, wobei die Normalenrichtungen der Koppelflächen senkrecht zueinander orientiert sind.

2. Anordnung nach Anspruch 1, **dadurch gekennzeichnet, dass**
die Litzendrähte jeweils an ihrem äußeren Umfang mit einer elektrischen Isolierschicht versehen sind.

3. Anordnung nach mindestens einem der vorangegangenen Ansprüche, **dadurch gekennzeichnet, dass**
das Koppelelement zumindest zwei Koppelflächen umfasst, wobei die zwischen den Koppelflächen anliegende Spannung erfassbar ist, insbesondere zum Empfangen von Daten.

4. Anordnung nach mindestens einem der vorangegangenen Ansprüche, **dadurch gekennzeichnet, dass**
die Koppelflächen metallisch und/oder im Wesentlichen eben ausgeführt sind.

5. Anordnung nach mindestens einem der vorangegangenen Ansprüche, **dadurch gekennzeichnet, dass**
die Normalenrichtungen auch senkrecht stehen zur Richtung des Primärleiters.

6. Anordnung nach mindestens einem der vorangegangenen Ansprüche, **dadurch gekennzeichnet, dass**
ein stationär angeordnetes Mittel zur Datenübertragung ebenfalls ein entsprechendes Koppelelement umfasst, insbesondere wobei Datenübertragung zwischen einem oder mehreren Wagen sowie dem stationär angeordneten Mittel vorgesehen ist.

7. Anordnung nach mindestens einem der vorangegangenen Ansprüche, **dadurch gekennzeichnet, dass**
an dem Wagen eine mit dem Primärleiter induktiv gekoppelte Sekundärwicklung zur Versorgung eines am Wagen vorgesehenen oder mit dem Wagen verbundenen oder elektrisch oder magnetisch gekoppelten Verbrauchers vorgesehen ist.

8. Anordnung nach mindestens einem der vorangegangenen Ansprüche, **dadurch gekennzeichnet, dass**
in den Primärleiter ein Wechselstrom eingeprägt wird, insbesondere mit einer Frequenz zwischen 10 und 500 kHz, insbesondere mit über 1 oder sogar 10 Ampere.

9. Anordnung nach Anspruch 7,
**dadurch gekennzeichnet, dass**
der Sekundärwicklung eine Kapazität derart in Reihe oder parallel zugeschaltet ist, dass die zugehörige Resonanzfrequenz im Wesentlichen der Frequenz des in den Primärleiter eingeprägten Wechselstromes entspricht.

## Claims

1. Arrangement for contactless energy transmission,
wherein a primary conductor laid elongated is provided, wherein at least one carriage movable along the primary conductor is provided,
wherein a means for data transmission is provided on the carriage,
wherein the primary conductor is composed of single-stranded wires provided electrically insulated from one another, **characterised in that**
the means for data transmission comprises at least one coupling element which is provided capacitively coupled to the stranded wires in such a way that signal voltages can be coupled into and/or out of the stranded wires,
wherein the coupling element comprises at least two coupling surfaces, to which a voltage can be applied for transmitting data,
wherein the normal directions of the coupling surfaces are oriented perpendicular to one another.

2. Arrangement according to Claim 1,
**characterised in that**
the stranded wires are each provided with an electrical insulating layer at their outer periphery.

3. Arrangement according to at least one of the preceding claims,
**characterised in that**
the coupling element comprises at least two coupling surfaces, wherein the voltage applied between the coupling surfaces is detectable, in particular for receiving data.

4. Arrangement according to at least one of the preceding claims,
**characterised in that**
the coupling surfaces are of metallic and/or substantially plane design.

5. Arrangement according to at least one of the preceding claims,
**characterised in that**
the normal directions are also perpendicular to the direction of the primary conductor.

6. Arrangement according to at least one of the preceding claims,
**characterised in that**
a stationarily arranged means for data transmission likewise comprises a corresponding coupling element, in particular wherein data transmission between one or more carriages and the stationarily arranged means is provided.

7. Arrangement according to at least one of the preceding claims,
**characterised in that**
on the carriage there is provided a secondary winding, inductively coupled to the primary conductor, for supplying a load provided on the carriage or electrically or magnetically coupled to the carriage.

8. Arrangement according to at least one of the preceding claims,
**characterised in that**
an alternating current, in particular with a frequency between 10 and 500 kHz, in particular with more than 1 or even 10 amperes, is applied to the primary conductor.

9. Arrangement according to Claim 7,
**characterised in that**
a capacitance is connected in series or in parallel with the secondary winding in such a way that the associated resonant frequency corresponds substantially to the frequency of the alternating current applied to the primary conductor.

## Revendications

1. Dispositif dévolu au transfert d'énergie sans contact,
sachant qu'il est prévu un conducteur primaire posé avec étendue en longueur,
sachant qu'il est prévu au moins un chariot pouvant être déplacé le long dudit conducteur primaire,
sachant qu'un moyen, affecté au transfert de données, est prévu sur ledit chariot,
ledit conducteur primaire étant composé de fils torsadés individuels, prévus avec isolation électrique les uns par rapport aux autres,
**caractérisé par le fait que**
le moyen, affecté au transfert de données, englobe au moins un élément de couplage prévu avec couplage capacitif aux fils torsadés, de façon telle que des tensions de signaux puissent être induites dans lesdits fils torsadés, et/ou extraites de ces derniers,
ledit élément de couplage incluant au moins deux surfaces de couplage auxquelles une tension peut être appliquée, en vue de l'émission de données,
les directions des normales desdites surfaces de couplage étant orientées avec perpendicularité mutuelle.

2. Dispositif selon la revendication 1,
**caractérisé par le fait que**
les fils torsadés sont respectivement dotés d'une couche d'isolation électrique sur leur pourtour extérieur.

3. Dispositif selon au moins l'une des revendications précédentes, **caractérisé par le fait que**
l'élément de couplage inclut au moins deux surfaces de couplage, sachant que la tension appliquée entre lesdites surfaces de couplage peut être détectée, notamment en vue de la réception de données.

4. Dispositif selon au moins l'une des revendications précédentes, **caractérisé par le fait que**
les surfaces de couplage sont de réalisation métallique, et/ou plane pour l'essentiel.

5. Dispositif selon au moins l'une des revendications précédentes, **caractérisé par le fait que**
les directions des normales sont également perpendiculaires à la direction du conducteur primaire.

6. Dispositif selon au moins l'une des revendications précédentes, **caractérisé par le fait**
**qu'**un moyen à implantation stationnaire, affecté au transfert de données, englobe pareillement un élément de couplage correspondant, sachant notamment qu'un transfert de données est prévu entre ledit moyen à implantation stationnaire et un ou plusieurs chariot(s).

7. Dispositif selon au moins l'une des revendications précédentes, **caractérisé par le fait**
**qu'**un enroulement secondaire, couplé inductivement au conducteur primaire, est prévu sur le chariot afin d'alimenter un appareil consommateur prévu sur ledit chariot ou raccordé audit chariot, voire couplé électriquement ou magnétiquement.

8. Dispositif selon au moins l'une des revendications précédentes, **caractérisé par le fait**
**qu'**un courant alternatif présentant, en particulier, une fréquence comprise entre 10 et 500 kHz et mesurant notamment plus de 1, voire même 10 ampères, est injecté dans le conducteur primaire.

9. Dispositif selon la revendication 7,
**caractérisé par le fait**
**qu'**un condensateur est branché en série ou en parallèle avec l'enroulement secondaire, de façon telle que la fréquence de résonance associée corresponde, pour l'essentiel, à la fréquence du courant alternatif injecté dans le conducteur primaire.
